# EUROPEAN PATENT APPLICATION

(11) **EP 4 699 913 A1**
(43) Date of publication of application: **25.02.2026**
(21) Application number: 24792346.9
(22) Date of filing: 14.02.2024
(51) Int. Cl.: B62D 57/02, B62D 11/04

(54) **MOVING DEVICE, AND CONTROL METHOD AND CONTROL PROGRAM FOR MOVING DEVICE**

(30) Priority: 19.04.2023 JP 2023068601
(71) Applicant: Sumitomo Heavy Industries, Ltd., Tokyo 141-6025 (JP)
(72) Inventor: FUJIMOTO, Hirokazu, Yokosuka-shi, Kanagawa 237-8555 (JP)
(74) Representative: Louis Pöhlau Lohrentz
(86) International application number: PCT/JP2024/005056
(87) International publication number: WO 2024/219070

(57) **Abstract**

A traveling robot 10 includes: a plurality of wheels 16 supported by a frame 20; a magnet 19 incorporated into each of the plurality of wheels 16; a magnet drive unit 191 that rotates the magnet 19 around a first rotary shaft Ax1; and a control unit 37. The control unit 37 detects an adhesion state between the wheels 16 and a traveling surface, based on an output of the magnet drive unit 191 when rotating the magnet 19.

## Description

### Technical Field

The present invention relates to a moving device, a control method for the moving device, and a control program for the moving device.

### Background Art

PTL 1 discloses a moving device which can travel on a wall surface while adhering four wheels to the wall surface by using a magnetic force. In this type of moving device, a back-driving available motor is adopted for driving a magnet incorporated into the wheel. In this way, the magnet can be passively adhered to a traveling surface of a magnetic body.

### Citation List

### Patent Literature

[PTL 1] International Publication No. WO2021/247275

### Summary of Invention

### Technical Problem

However, in the above-described moving device of the related art, it is difficult to confirm the adhesion state between the wheel (the magnet) and the traveling surface. For example, in a case of confirming the adhesion state of the wheel with respect to a traveling surface whose material or shape is unknown, an operator needs to set the angle (direction) of the magnet by visually confirming the shape of the traveling surface or to acquire information on the material of the traveling surface (such as whether or not the material is a magnetic body).

The present invention has been made in view of the above circumstances, and an object of the present invention is to enable a simple confirmation of an adhesion state between a wheel and a traveling surface.

### Solution to Problem

A moving device according to the present invention includes:
a plurality of wheels supported by a vehicle body;
a magnet incorporated into each of the plurality of wheels;
a magnet drive unit that rotates the magnet around a rotary shaft; and
a control unit that detects an adhesion state between the wheel and a traveling surface, based on an output of the magnet drive unit when rotating the magnet.

### Advantageous Effects of Invention

According to the present invention, the adhesion state between the wheel and the traveling surface can be easily confirmed.

### Brief Description of Drawings

FIG. 1A is a plan view of a traveling robot according to an embodiment.
FIG. 1B is a perspective view of the traveling robot according to the embodiment.
FIG. 2A is a sectional view showing a structure of a wheel according to the embodiment, and is a diagram as viewed in a Y direction.
FIG. 2B is a sectional view showing a structure of the wheel according to the embodiment, and is a diagram as viewed in an X direction.
FIG. 3 is a block diagram showing a schematic control configuration of the traveling robot according to the embodiment.
FIG. 4 is a flowchart showing the procedure of adhesion confirmation processing according to the embodiment.
FIG. 5A is a diagram showing a rotation range of a magnet in a search for an adhesion surface in the adhesion confirmation processing.
FIG. 5B is a graph showing an electric current value of a magnet drive unit corresponding to the rotation range of the magnet in the search for the adhesion surface in the adhesion confirmation processing.
FIG. 6 is a graph showing an electric current value of the magnet drive unit when the magnet is oscillated in an adhesion determination in the adhesion confirmation processing according to the embodiment.
FIG. 7 is a schematic diagram of an actual measurement example of the graph of FIG. 6.

### Description of Embodiments

Hereinafter, an embodiment according to the present invention will be described in detail with reference to the drawings.

### [Configuration of Traveling Robot]

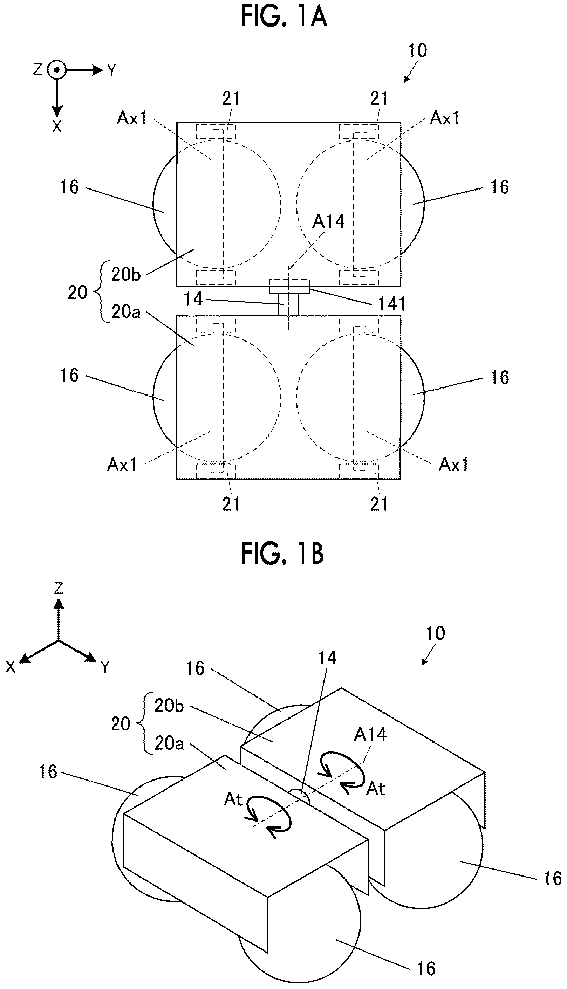

FIG. 1A is a plan view of a traveling robot 10 according to the present embodiment, and FIG. 1B is a perspective view of the traveling robot 10.

As shown in FIGS. 1A and 1B, the traveling robot 10 is an example of a moving device according to the present invention, and is a robot that is capable of traveling on a floor surface, a wall surface, a ceiling surface, or the like by adhering wheels 16 to these surfaces. For example, the traveling robot 10 is remotely operated by an operator, or autonomously travels, based on a predetermined traveling program.

Hereinafter, each direction of XYZ orthogonal to each other is set as shown in each drawing. In the present embodiment, an XY plane is a horizontal plane, and a Z direction is a vertical direction.

Specifically, the traveling robot 10 includes a plurality of wheels 16 and a frame 20 (a vehicle body) that supports (rotatably supports) the plurality of wheels 16.

Each of four wheels 16 is supported to be rotatable around a first rotary shaft Ax1 along an X direction. Each of the wheels 16 has a spherical shape (spherical shell shape), and is configured to transmit a driving force to a traveling surface in various directions. The number of the wheels 16 may be three, five, or more, or may be one or two. In a case where the number of the wheels 16 is one or two, the frame 20 can be supported by providing a caster which can roll as an auxiliary wheel in addition to the wheel 16. In addition, it is not essential that the wheel 16 has the spherical shape, and for example, the wheel 16 may have any shape such as a roller shape, as long as the wheel 16 can follow the traveling surface in various directions and can transmit the driving force to the traveling surface.

The frame 20 includes a first frame 20a and a second frame 20b which are aligned in the X direction. Each of the first frame 20a and the second frame 20b rotatably supports two wheels 16 aligned in a Y direction via the first rotary shaft Ax1.

The first frame 20a and the second frame 20b are connected to each other via a suspension mechanism 14.

The suspension mechanism 14 is a mechanism capable of changing a disposition relationship between the first frame 20a and the second frame 20b in a twisting direction At. The twisting direction At is a rotation direction around an axis A14 extending in a direction (the X direction) in which the first frame 20a and the second frame 20b are aligned. The mechanism is also called a rocker suspension mechanism. The suspension mechanism 14 can change the disposition relationship between the first frame 20a and the second frame 20b in the twisting direction At, and can bring the four wheels 16 into contact with curved surfaces having various shapes.

In addition, a measuring instrument 141 such as an encoder for measuring a deformed degree is provided in the suspension mechanism 14.

The suspension mechanism 14 is not limited to the above-described example. For example, the suspension mechanism 14 may be a mechanism that can relatively displace a frame for rotatably supporting one wheel 16 and a frame for rotatably supporting three wheels 16. Alternatively, the suspension mechanism 14 may have a configuration in which a frame for supporting each wheel 16 can displace with respect to each of a plurality of frames for supporting the other wheels 16. Without being limited to the configuration which can displace the frame in the twisting direction, as the configuration which can displace the frame, a configuration which enables a translational movement of each frame in the direction in which the frames are aligned, a configuration which enables a translational movement of the frame in a direction perpendicular or oblique to the direction in which the frames are aligned, a configuration in which one or both of an angle and a distance between the two frames are variable via various link mechanisms, and a configuration in which two or more of these configurations are combined may be applied.

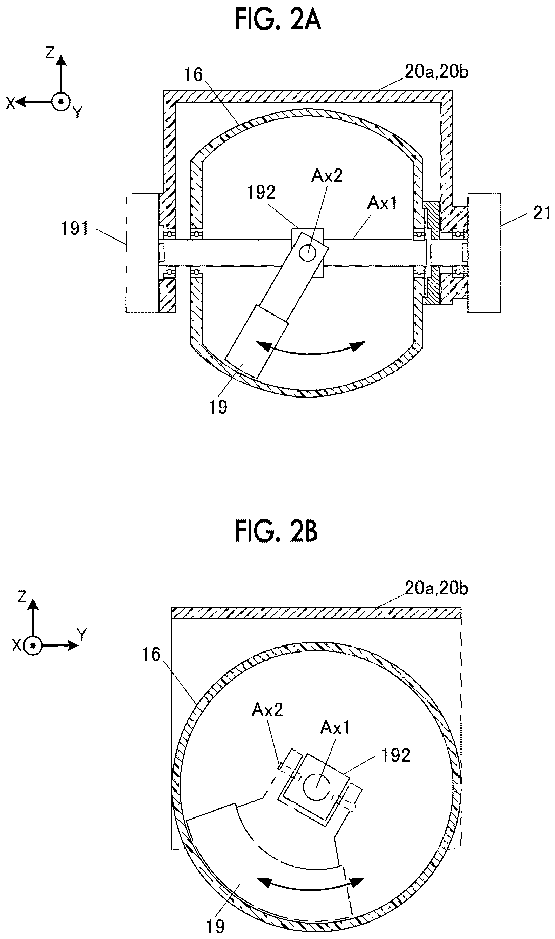

FIG. 2A is a sectional view showing a structure of the wheel 16, and is a diagram as viewed in the Y direction, and FIG. 2B is a sectional view showing a structure of the wheel 16, and is a diagram as viewed in the X direction.

As shown in FIGS. 2A and 2B, a magnet 19 and a link mechanism 192 that supports the magnet 19 to be displaceable are incorporated into each of the wheels 16.

The link mechanism 192 supports the magnet 19 to be rotatable in a rotation direction around the first rotary shaft Ax1 and a rotation direction around a second rotary shaft Ax2 intersecting (for example, orthogonal to) the first rotary shaft Ax1. The magnet 19 may be a permanent magnet, or may be an electromagnet. According to the configuration, in a case where the wheel 16 is grounded to a magnetic body such as iron, the magnet is attracted to a ground surface, so that the wheel 16 is adhered to the ground surface. Therefore, the traveling robot 10 can be adhered to the wall surface or the ceiling surface against gravity, and can travel on the surface. In addition, even in a case where the wheel 16 is grounded on a surface having various directions, due to the link mechanism 192, the magnet 19 faces the ground surface by independently and flexibly changing a direction from the wheel 16, and a strong suction force with respect to the ground surface is obtained.

In addition, a wheel drive unit 21 that rotationally drives the wheels 16, and a magnet drive unit 191 that rotationally drives the magnet 19 are provided in each of the wheels 16.

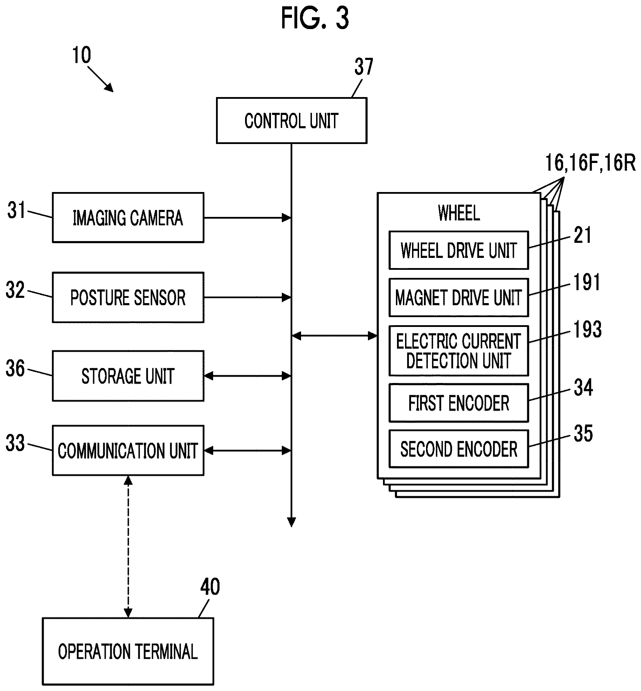

The wheel drive unit 21 is a motor (for example, a gear motor) capable of controlling a rotation amount or a rotation speed, and rotates the wheel 16 around the same axis as that of the first rotary shaft Ax1. The rotation amount or the rotation speed of the wheel 16 is measured by a first encoder 34 (refer to FIG. 3).

The magnet drive unit 191 (magnet motor) is a motor (for example, a gear motor) capable of controlling a rotation amount or a rotation speed, and rotates the first rotary shaft Ax1 that supports the magnet 19. An electric current value of the magnet drive unit 191 is detected by an electric current detection unit 193 (refer to FIG. 3). For example, an orientation (direction) of the magnet 19 is detected by a second encoder 35 (refer to FIG. 3) which is a two-axis encoder. In addition, as the magnet drive unit 191, a back-driving available magnet drive unit is used in a case where a torque output is turned off.

According to the traveling robot 10 configured as described above, movements in various directions, such as turning, leftward turning, rightward turning, and straight advancing, are possible by controlling the rotation amount of each of the four wheels 16. Furthermore, even when the traveling surface is a curved surface, the suspension mechanism 14 enables the traveling robot 10 to travel in a state where all the four wheels 16 are grounded on the traveling surface.

FIG. 3 is a block diagram showing a schematic control configuration of the traveling robot 10.

As shown in the drawing, the traveling robot 10 includes, in addition to the above-described configuration, an imaging camera 31, a posture sensor 32, a communication unit 33, a storage unit 36, and a control unit 37.

The imaging camera 31 is mounted on the frame 20, for example, captures a front image in the traveling direction, and stores the image in the storage unit 36. It is desirable that the imaging camera 31 can acquire distance information together by adopting 3D-Light Detection and Ranging (LiDAR) or the like, for example.

The posture sensor 32 is mounted on the frame 20, and measures three-dimensional acceleration and an angular velocity of the frame 20, which are then output to the control unit 37. For example, the posture sensor 32 is an inertial measurement unit (IMU).

The communication unit 33 transmits and receives various types of information to and from an operation terminal 40 or the like of an operator through a predetermined communication network or the like, based on a predetermined wireless communication standard.

The storage unit 36 is a memory configured with, for example, a random access memory (RAM), a read only memory (ROM), or the like, stores various programs and data, and functions as a work region of the control unit 37.

For example, the control unit 37 includes a central processing unit (CPU) or the like, and controls an operation of each part of the traveling robot 10. Specifically, the control unit 37 operates the wheel drive unit 21 and the magnet drive unit 191, based on an operation command or the like from the operator through the communication unit 33, or deploys a program stored in advance in the storage unit 36, and executes various types of processing in cooperation with the deployed program.

### [Adhesion Confirmation Processing]

Subsequently, adhesion confirmation processing of confirming the adhesion state between the wheel 16 (the magnet 19) and the traveling surface will be described.

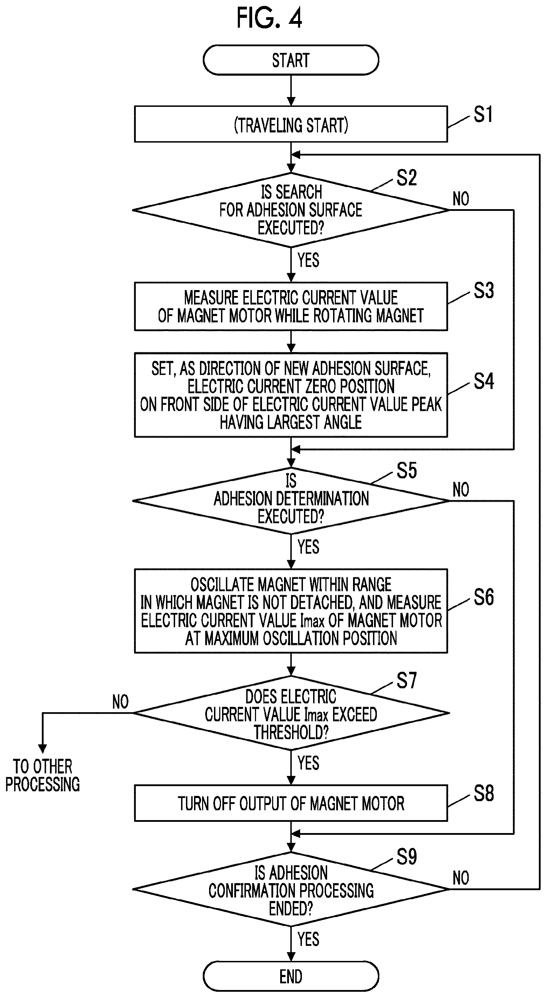

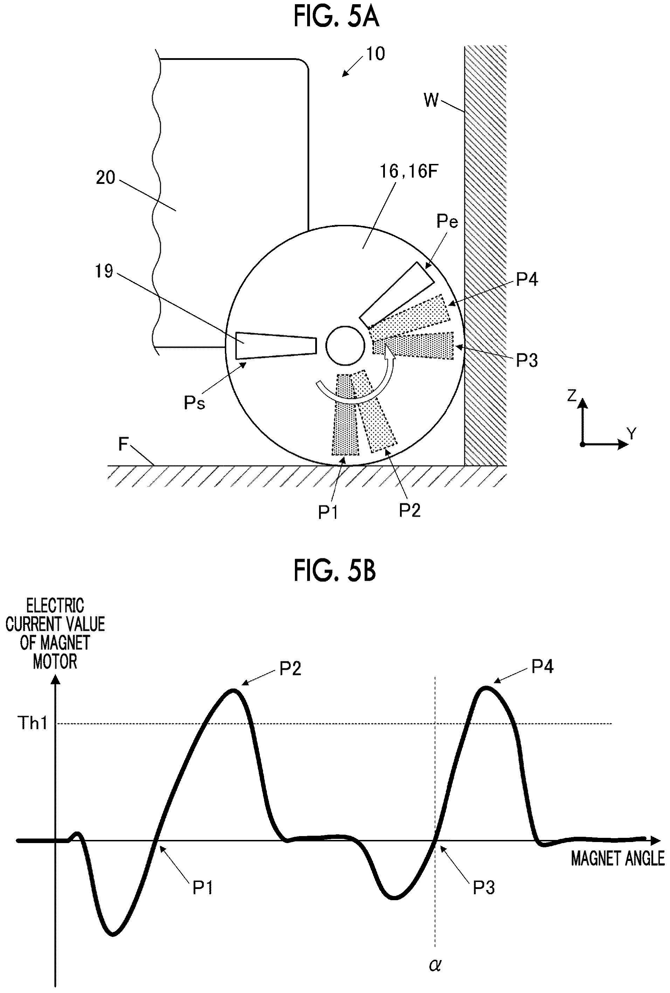

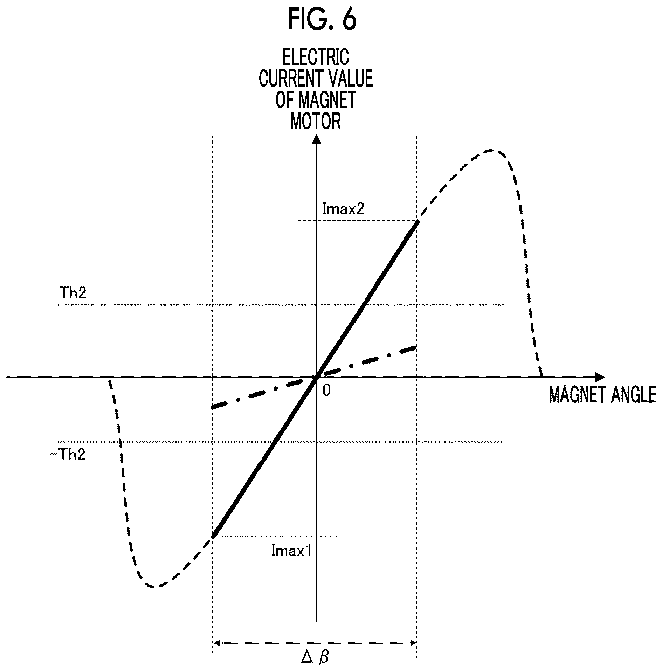

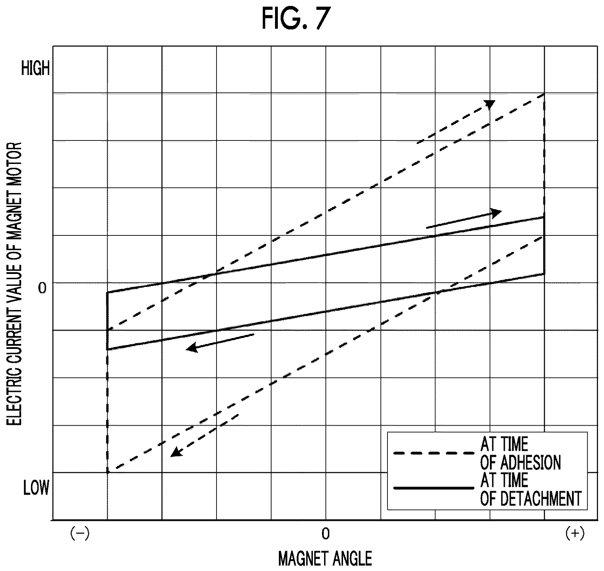

FIG. 4 is a flowchart showing the procedure of the adhesion confirmation processing. FIG. 5A is a diagram showing a rotation range of the magnet 19 in search for an adhesion surface in the adhesion confirmation processing, and FIG. 5B is a graph showing an electric current value of the magnet drive unit 191 corresponding to the rotation range of the magnet 19 in the search for the adhesion surface. FIGS. 6 and 7 are diagrams for explaining an adhesion determination in the adhesion confirmation processing, in which FIG. 6 is a graph showing an electric current value of the magnet drive unit 191 when the magnet 19 is oscillated in the adhesion determination, and FIG. 7 is a schematic diagram of an actual measurement example of the graph of FIG. 6.

The adhesion confirmation processing is executed when a new adhesion surface in front different from the current adhesion surface (traveling surface) is searched for, when it is determined whether or not the adhesion state to the current adhesion surface is good, or the like. The adhesion confirmation processing is executed by the control unit 37 reading out the corresponding program from the storage unit 36 and deploying the program.

Here, a case where the traveling robot 10 travels on a floor surface F in the Y direction and then moves onto a substantially vertical wall surface W will be described (refer to FIG. 5A). Both the floor surface F and the wall surface W are made of a magnetic material, and the magnet 19 is adhered to the surfaces.

In addition, in the following description, there is a case where among the four wheels 16, two wheels on the front side in the traveling direction (the Y direction) are referred to as front wheels 16F, and two wheels on the rear side in the traveling direction are referred to as rear wheels 16R.

As shown in FIG. 4, when the adhesion confirmation processing is executed and, for example, a traveling start command of the operator is transmitted from the operation terminal 40 to the traveling robot 10, the control unit 37 starts the traveling of the traveling robot 10 on the floor surface F (step S1).

At this time, the magnet drive unit 191 is not operated (does not generate torque), and the magnet 19 faces vertically downward by a magnetic force or its own weight.

Next, the control unit 37 determines whether or not to execute the search for a new adhesion surface of the wheel 16 (step S2).

Here, in a case where a predetermined execution trigger is detected, the control unit 37 determines that the search for the adhesion surface is executed. The execution trigger is not particularly limited, and may be, for example, an execution command of the operator, which is input from the operation terminal 40, or may be detection that the front wheel 16F is in a stacked state (a state of being fitted into a recessed portion of the traveling surface or the like). The stacked state of the front wheel 16F can be, for example, detection that the front wheel 16F is in a stacked state, in a case where the angle (direction) of the magnet 19 in the front wheel 16F is equal to or larger than a predetermined angle, and/or a case where the electric current value (that is, the output torque of the wheel 16) of the wheel drive unit 21 that drives the front wheel 16F is equal to or larger than a predetermined value, or the like. Alternatively, in a case where it is determined that the front wheel 16F is in a predetermined state including the stacked state, based on the image information obtained by the imaging camera 31, it may be determined that the execution trigger is detected.

Then, in a case where in step S2, it is determined that the search for the new adhesion surface is not executed (step S2: No), the control unit 37 causes the processing to transition to step S5 which will be described later.

On the other hand, in a case where in step S2, it is determined that the search for the new adhesion surface is executed (step S2: Yes), the control unit 37 detects the electric current value of the magnet drive unit 191 that drives the magnet 19 while operating (rotating) the magnet 19 of the front wheel 16F to the front side in the traveling direction (step S3). In the present embodiment, as shown in FIG. 5A, after the front wheel 16F comes into contact with the front wall surface W, the wall surface W is searched for as a new adhesion surface (traveling surface) of the front wheel 16F (the magnet 19).

Specifically, the control unit 37 rotates the magnet 19 of the front wheel 16F from a start position Ps, which is a substantially horizontal position facing rearward, to an end position Pe slightly above the horizontal position facing forward through a vertically lower side. A rotation range of the magnet 19 is not particularly limited, but is preferably, for example, a range including at least a lower half portion (from a rearward direction to a frontward direction). In the present embodiment, the rotation range is the entire range in which the magnet 19 can physically come into contact with the adhesion surface. In addition, when it is known in advance that the adhesion surface is present in the traveling direction of the traveling robot 10, the magnet angle in step S2 may be set as the start position Ps. The control unit 37 controls the magnet drive unit 191 while detecting an angle (direction) around the first rotary shaft Ax1 by the second encoder 35, and rotates the magnet 19 in the above-mentioned rotation range.

Then, the control unit 37 detects the electric current value of the magnet drive unit 191 when the magnet 19 is rotated in the above-described rotation range, with the electric current detection unit 193. In this way, the output torque (resistance torque) of the magnet drive unit 191 when the magnet 19 is rotated is measured as an electric current value.

In the present embodiment, for example, as shown in FIG. 5B, an electric current value curve having an adhesion point P1 and a detachment point P2 with respect to the floor surface F and an adhesion point P3 and a detachment point P4 with respect to the wall surface W is obtained. An angle difference between the adhesion point P3 and the detachment point P4 depends on the magnetic force of the magnet 19, the magnetic characteristics of the traveling surface, or the like, but is approximately 30° in the present embodiment.

Next, the control unit 37 sets a direction of the new adhesion surface, based on the electric current value (the electric current value curve) of the magnet drive unit 191 acquired in step S3 (step S4).

Specifically, the control unit 37 sets, as the direction of the new adhesion surface, an angle at which the electric current value first becomes zero toward the rear side (the negative angle side) from the largest angle of the magnet 19 among the angles at which the electric current value exceeds a first threshold Th1. In the present embodiment, an angle α of the adhesion point P3 at which the electric current value first becomes zero toward the negative angle side from the detachment point P4 with respect to the wall surface W, which is an electric current value peak having the largest angle, is set as the direction of the new adhesion surface of the front wheel 16F. In addition, in a case where the electric current value does not become zero even in the adhesion surface direction due to the influence of gravity, friction, or the like acting on the magnet 19, a threshold considering gravity or friction may be set, and an angle at which the electric current value first becomes zero toward the rear side of the threshold may be set as the direction of the new adhesion surface.

Here, the first threshold Th1 is a determination threshold value as to whether or not the magnet 19 is adhered, and is set in advance, for example, based on an actual electric current measurement value when the magnet 19 is actually adhered to the wall surface W or the like.

Thereafter, the control unit 37 turns off the output of the magnet drive unit 191. However, in a case where the adhesion determination in steps S5 to S8 which will be described later is executed, after the execution, the output of the magnet drive unit 191 may be turned off.

In this way, the magnet 19 of the front wheel 16F is in a state of being adhered to the wall surface W which is a new adhesion surface.

Next, as shown in FIG. 4, the control unit 37 determines whether or not to execute the adhesion determination, which is the determination of whether or not the adhesion state of the wheel 16 is good (step S5).

Here, the control unit 37 executes the adhesion determination on the wheel 16, for example, in a case where the search for the adhesion surface of the wheel 16 is executed in steps S2 to S4. In addition, for example, in a case where the execution command of the operator is input from the operation terminal 40, the control unit 37 may determine that the adhesion determination is executed, even when the search for the adhesion surface is not executed in steps S2 to S4, or with respect to the wheel 16 other than the wheel 16 on which the search for the adhesion surface is executed.

Then, in a case where in step S5, it is determined that the adhesion determination is not executed (step S5: No), the control unit 37 causes the processing to transition to step S9 which will be described later.

On the other hand, in a case where in step S5, it is determined that the adhesion determination is executed (step S5: Yes), the control unit 37 oscillates (rotates) the magnet 19 of the front wheel 16F within a range in which the magnet 19 is not detached, and detects the electric current value of the magnet drive unit 191 at the maximum oscillation position at that time (step S6). The "range in which the magnet 19 is not detached" is a range in which the adhesion to the traveling surface by a magnetic force is not released.

Specifically, the control unit 37 oscillates the magnet 19 in a predetermined oscillation range (angle range) Δβ before and after the angle at the time of the determination start, as shown by a solid line in FIG. 6, for example. The oscillation range Δβ is set in advance, as the range in which the magnet 19 is not detached, for example, based on a preliminary measurement in advance. Then, the control unit 37 detects electric current values Imax1 and Imax2 of the magnet drive unit 191 at the maximum oscillation position at that time.

As shown in FIG. 7, an actual electric current value curve at this time is a hysteresis curve, and an electric current value is different depending on a movement direction of the magnet 19. Therefore, a value when an oscillation angle (absolute value) is increased from an oscillation center, which is a relatively large value, is adopted as the electric current value that is used for comparison with a second threshold Th2, which will be described later, or the like.

Next, the control unit 37 determines whether or not both of the electric current values Imax1 and Imax2 (absolute values thereof) of the magnet drive unit 191 at the maximum oscillation position detected in step S6 exceed the second threshold Th2 (step S7).

Here, the second threshold Th2 is a determination threshold value as to whether or not the magnet 19 is properly adhered, and is set in advance, for example, based on an actual electric current measurement value when the magnet 19 is actually adhered to the adhesion surface or the like. More specifically, it is preferable that the electric current value curve at the time of magnet adhesion and the electric current value curve at the time of detachment (non-adhesion) are measured and the second threshold Th2 is appropriately set based on a difference between the electric current value curves. The second threshold Th2 in the present embodiment is not particularly limited, but is a value larger than the first threshold Th1. That is, the adhesion determination in step S7 has a determination criterion higher than that of the adhesion determination in the search for the adhesion surface in step S4.

In addition, the determination in this step may be a determination of whether or not, rather than both of the two electric current values Imax1 and Imax2 (absolute values thereof), at least one of the two electric current values exceeds the second threshold Th2.

Then, for example, in a case where it is determined that at least one of the electric current values Imax1 and Imax2 does not exceed the second threshold Th2, such as when the electric current value curve is a curve as shown by a one-dot chain line in FIG. 6 (step S7: No), the control unit 37 can determine that the magnet 19 is not properly adhered to the adhesion surface (the wall surface W). Therefore, the control unit 37 executes other processing corresponding thereto. In this case, for example, the control unit 37 may cause the processing to transition to step S2 described above to execute the search for the adhesion surface again, or may notify the operator that the wheel 16 is not in an appropriate adhesion state. Alternatively, the position of the traveling robot 10 at this time may be determined as a non-adherable (non-travelable) region, and the traveling robot 10 may automatically return to the immediately preceding travelable region, or the position may be mapped as a non-travelable region such that the traveling robot 10 can avoid re-entering the position.

On the other hand, in a case where it is determined that both the electric current values Imax1 and Imax2 exceed the second threshold Th2 (step S7: Yes), the control unit 37 can determine that the magnet 19 is properly adhered to the adhesion surface (the wall surface W), and thus turns off the output of the magnet drive unit 191 (step S8).

Then, the control unit 37 determines whether or not to end the adhesion confirmation processing (step S9). When it is determined that the adhesion confirmation processing is not ended (step S9: No), the control unit 37 causes the processing to transition to step S2 described above.

Then, in a case where it is determined that the adhesion confirmation processing is ended, for example, due to the completion of the movement to a target position, or the like (step S9: Yes), the control unit 37 ends the adhesion confirmation processing.

The adhesion confirmation processing described above can be roughly divided into the search for the adhesion surface in steps S2 to S4 and the adhesion determination in steps S5 to S8.

Among these, the search for the adhesion surface in steps S2 to S4 is processing of rotating the magnet 19 in one direction in an angle range including at least the detachment from the current traveling surface, for example, in a case of searching for the position of an unknown traveling surface (magnetic body). On the other hand, the adhesion determination in steps S5 to S8 is processing of oscillating the magnet 19 in both the forward direction and the rearward direction within a range where the magnet 19 is not detached, in a case of determining whether or not the current adhesion state of the magnet 19 is good, or the like.

These types of processing are common in that the adhesion state between the magnet 19 and the traveling surface is detected (sensed) based on the electric current value (that is, the output torque) of the magnet drive unit 191. However, relatively, the search for the adhesion surface is relatively rough processing that is performed in a large angle range including detachment, and the adhesion determination is delicate processing that is performed in a small angle range in which the detachment is not performed.

In addition, these types of processing may be executed as a series of types of processing as in the present embodiment, or each processing may be executed independently.

In addition, in the adhesion confirmation processing described above, since the adhesion state of the wheel 16 is temporarily released (or there is a possibility thereof), it is preferable to sequentially perform each processing even in a state where the plurality of wheels 16 are executable.

The processing execution order of the wheel 16 in this case may be determined, for example, based on the height (difference) of the wheel 16 at that point in time. In a case where there is a difference between the heights of the plurality of wheels 16, it is preferable to sequentially confirm the adhesion from the wheel 16 in which even though the adhesion force is lost, there is a low possibility that the balance of the vehicle body is lost, that is, the wheel 16 having a low height. A method for detecting the height of each wheel 16 is not particularly limited, and may be estimated, for example, based on the posture of the frame 20 (the vehicle body) detected by the posture sensor 32, image information obtained by the imaging camera 31, or the like.

In addition, in a case where a cable (for example, a cable for supplying gas, electric power, or the like to a mounting object of the frame 20) is routed between the traveling robot 10 and the outside, the cable may act to exert a force of peeling off the wheel 16 from the traveling surface. Therefore, the processing execution order of the wheel 16 may be determined based on the position or the direction of the cable.

In addition, in a case where there is the wheel 16 that does not have a sufficient adhesion force, the search for the adhesion surface of the wheel 16 may be preferentially executed in order to secure the adhesion force.

In addition, in step S6, the magnet 19 is oscillated in both directions from the position (angle) at the time of the start of the determination. However, the magnet 19 may be simply rotated in any one of the forward direction and the rearward direction from the start position.

In addition, in step S7, the electric current value at the maximum oscillation position is compared with the second threshold Th2. However, for example, in a case where the electric current value already exceeds the second threshold Th2 before the maximum oscillation position, and the electric current value rises at a steep inclination angle, or the like, it is determined that the electric current value exceeds the second threshold Th2 at that point in time, and the magnet 19 does not need to be rotated to the maximum oscillation position. Here, the "steep inclination angle" is a rising angle of an electric current value curve that is estimated to reliably exceed the second threshold Th2 at the maximum oscillation position when the inclination angle is extended. Alternatively, the adhesion determination may be performed based on the electric current value of the magnet drive unit 191 by using a learning model created in advance by machine learning.

In addition, the electric current value of the magnet drive unit 191 may be affected by a magnetic field from a portion other than the wheel 16, such as the frame 20 (the vehicle body), or may be superimposed with the resistance torque of the first rotary shaft Ax1 of the magnet 19, or the resistance torque of a speed reducer in a case where the speed reducer is provided. Therefore, it is preferable to acquire in advance a profile of the electric current value when the magnet 19 is rotated in a state where a magnetic body is excluded from the periphery, and to set the first threshold Th1 and the second threshold Th2 in consideration of this profile.

### [Technical Effect of the Present Embodiment]

As described above, according to the present embodiment, the adhesion state between the wheel 16 and the traveling surface is detected based on the electric current value (output) of the magnet drive unit 191 when the magnet 19 is rotated.

In this way, the search for a new adhesion surface, the determination of whether or not the adhesion state is good, or the like can be executed by using an internal sensor that detects the output of the magnet drive unit 191. Therefore, the adhesion state between the wheel 16 (the magnet 19) and the traveling surface can be easily confirmed compared to the related art in which an operation based on the visual inspection of the operator or the like is required.

As a result, a traveling surface having a more complicated shape can be traveled without requiring a complicated operation of the operator, and re-entry to the traveling surface to which the wheel 16 cannot be adhered can be prevented. In addition, the operator does not need to always monitor the state of the traveling robot 10 and the traveling surface shape, and even an operator with a low skill level can suitably steer the traveling robot 10.

In addition, according to the present embodiment, the adhesion state with respect to the traveling surface is sequentially detected for each wheel with respect to the plurality of wheels 16.

In this way, it is possible to suppress a possibility that the traveling robot 10 loses the balance when the adhesion forces of the plurality of wheels 16 are lost at the same time.

In addition, according to the present embodiment, the order of the wheels 16 on which the detection of the adhesion state is to be performed is determined based on the posture information of the frame 20.

In this way, the adhesion state can be confirmed with respect to the plurality of wheels 16, for example, in an ascending order of height or in an ascending order of the peeling force by the cable. Therefore, the possibility that the balance of the vehicle body is lost is suppressed, and the adhesion state can be more safely confirmed.

In addition, according to the present embodiment, the electric current value of the magnet drive unit 191 is detected while rotating the magnet 19 from the rear side to the front side of the frame 20 by operating the magnet drive unit 191. Then, an angle at which the electric current value first becomes zero toward the negative side from the largest angle among the angles at which the electric current value exceeds the first threshold Th1 is set as a direction of a new adhesion surface.

In this way, the search for a new adhesion surface can be easily executed, and for example, the transfer to the wall surface W, the gap crossing, or the like can be automatically executed. As a result, a traveling surface having an unknown shape can be preferably traveled.

In addition, according to the present embodiment, the electric current value of the magnet drive unit 191 is detected while oscillating the magnet 19 within a range where the adhesion to the traveling surface by the magnetic force is not released, by operating the magnet drive unit 191. Then, it is determined whether or not the magnet 19 and the traveling surface are adhered to each other, based on comparison of the electric current value with the second threshold Th2.

In this way, it can be easily confirmed whether or not the magnet 19 is properly adhered to the adhesion surface, and whether or not the contact surface of the wheel 16 is a surface to which the magnet can be adhered (a surface on which the wheel can travel).

### [Others]

Although the embodiment of the present invention has been described above, the present invention is not limited to the above embodiment.

For example, in the above-described embodiment, the adhesion confirmation processing in a case where the traveling robot 10 moves from the floor surface F to the wall surface W has been described as an example. However, a surface to which the adhesion confirmation processing can be applied is not particularly limited.

In addition, the moving device according to the present invention may be applied to a traveling robot that moves on each part of a steel structure, for example, in shipbuilding and heavy industry fields, construction and building fields, infrastructure inspection and maintenance fields, and the like.

In addition, the details shown in the embodiment described above can be appropriately changed within a scope which does not depart from the concept of the invention.

### Industrial Applicability

As described above, the present invention is useful for allowing the adhesion state between the wheel and the traveling surface to be easily confirmed.

### Reference Signs List

- 10: Traveling robot (moving device)
- 16: Wheel
- 16F: Front wheel
- 19: Magnet
- 20: Frame (vehicle body)
- 32: Posture sensor (posture acquisition unit)
- 35: Second encoder
- 36: Storage unit
- 37: Control unit
- 191: Magnet drive unit
- 193: Electric current detection unit
- Ax1: First rotary shaft
- Ax2: Second rotary shaft
- F: Floor surface
- W: Wall surface
- Imax1, Imax2: Electric current value of magnet drive unit at maximum oscillation position
- P1: Adhesion point between magnet and floor surface
- P2: Detachment point between magnet and floor surface
- P3: Adhesion point between magnet and wall surface
- P4: Detachment point between magnet and wall surface
- Ps: Start position of rotation of magnet
- Pe: End position of rotation of magnet
- Th1: First threshold
- Th2: Second threshold
- α: Angle of magnet (angle that is set as new adhesion surface)
- Δβ: Oscillation range

## Claims

1. A moving device comprising:
a plurality of wheels supported by a vehicle body;
a magnet rotatable with respect to the vehicle body; and
a control unit that detects an adhesion state between the wheel and a traveling surface by detecting torque or an angle of the magnet.

2. The moving device according to claim 1,
wherein the magnet is incorporated into each of the plurality of wheels, and
the control unit performs detection of the adhesion state to the traveling surface for each wheel with respect to the plurality of wheels.

3. The moving device according to claim 2, further comprising:
a posture acquisition unit that acquires posture information of the vehicle body,
wherein the control unit determines an order of the wheels on which detection of the adhesion state is to be performed, based on the posture information.

4. The moving device according to claim 1,
wherein the control unit
detects an electric current value of the magnet drive unit while rotating the magnet from a rear side to a front side of the vehicle body by operating the magnet drive unit, and
sets, as a direction of a new adhesion surface to which the magnet is adhered, an angle at which the electric current value first becomes zero toward a negative side from a largest angle of the magnet among angles at which the electric current value exceeds a first threshold.

5. The moving device according to claim 1,
wherein the control unit
detects an electric current value of the magnet drive unit while oscillating the magnet within a range in which adhesion to the traveling surface by a magnetic force is not released, by operating the magnet drive unit, and
determines whether or not the magnet and the traveling surface are adhered to each other, based on comparison of the detected electric current value of the magnet drive unit with a second threshold.

6. A control method for a moving device that includes a plurality of wheels supported by a vehicle body, a magnet incorporated into each of the plurality of wheels, and a magnet drive unit that rotates the magnet around a rotary shaft, the control method comprising:
causing a control unit of the moving device to execute
a process of detecting an output of the magnet dive unit while rotating the magnet by operating the magnet drive unit, and
a process of detecting an adhesion state between the wheel and a traveling surface, based on the output of the magnet drive unit.

7. A control program for a moving device that includes a plurality of wheels supported by a vehicle body, a magnet incorporated into each of the plurality of wheels, and a magnet drive unit that rotates the magnet around a rotary shaft, the control program causing
a computer of the moving device to function as a control unit that detects an adhesion state between the wheel and a traveling surface, based on an output of the magnet drive unit when rotating the magnet.
